# EUROPÄISCHE PATENTSCHRIFT

(11) **EP 2 225 983 B1**
(45) Veröffentlichungstag und Bekanntmachung des Hinweises auf die Patenterteilung: **05.08.2015**
(21) Anmeldenummer: 10155418.6
(22) Anmeldetag: 04.03.2010
(51) Int. Cl.: A47K 3/30, F16B 5/06

(54) **Verbindungsanordnung einer Trennwand**
Connection assembly of a partition
Agencement de raccordement d'une paroi de séparation

(30) Priorität: 07.03.2009 DE 202009002958 U
(43) Veröffentlichungstag der Anmeldung: 08.09.2010
(73) Patentinhaber: Altura Leiden Holding B.V., 4131 LX Vianen ZH (NL)
(72) Erfinder: Baus, Heinz G., 98000 Monaco (MC)
(74) Vertreter: Schmitt, Meinrad

(56) Entgegenhaltungen:
- DE-A1- 19 633 225

## Beschreibung

Die Erfindung bezieht sich auf eine Verbindungsanordnung einer Trennwand, insbesondere einer Duschtrennwand, gemäß den im Oberbegriff des Anspruchs 1 angegebenen Merkmalen.

Derartige Verbindungsanordnungen dienen zur Verbindung einer Platte, insbesondere aus Silikatglas, einer Trennwand mit einer Raumwand oder weiteren Elementen einer insbesondere als Duschtrennwand ausgebildeten Trennwand. Die Verbindungsanordnungen enthalten eine im Einbauzustand im Wesentlichen vertikal ausgerichtete Profilschiene sowie Verbindungselemente mit dem ebenfalls im Wesentlichen vertikal ausgerichteten Längsrand der Platte, welche ein Trennelement der Trennwand bildet. Je nach Anforderung können solche Platten unterschiedliche Materialdicken aufweisen mit der Folge, dass entsprechend der Plattendicke die Verbindungsanordnung auszubilden ist und insbesondere unterschiedlich ausgebildete Profilschienen erforderlich sind, wodurch ein erheblicher Fertigungs- und/oder Lagerhaltungsaufwand erforderlich ist.

Das Dokument DE 196 33 225 A1 offenbart die Merkmale des Oberbegriffs des Anspruchs 1 und beschreibt eine Duschtrennwand, die ein über eine Befestigungseinrichtung an einer Wand gehalterten Wandteil und eine mit diesem über Gelenksanordnungen verschwenkbar verbundene Tür umfasst. Die Befestigungseinrichtung ist in Längsrichtung zweiteilig mit einem Ankerprofil und einem Deckprofil ausgebildet und weist zwei zueinander beabstandete, in Längsrichtung verstellbare Haltevorrichtungen für das feststehende Wandteil auf. Das Wandteil wird zwischen dem Deckprofil und dem Ankerprofil mittels einer Schraubverbindung aufgenommen.

Hiervon ausgehend liegt der Erfindung die Aufgabe zugrunde, mit einem geringen konstruktiven Aufwand die Verbindungsanordnung derart auszubilden, dass Platten unterschiedlicher Dicke eingesetzt werden können und/oder dass ein geringes Bauvolumen erreicht wird und/oder dass ein reduzierter Materialaufwand erforderlich wird. Die Verbindungsanordnung soll in einfacher Weise handhabbar sein und/oder mit geringem Zeit- und Arbeitsaufwand die Herstellung der Verbindung und insgesamt die Montage der Trennwand ermöglichen.

Die Lösung dieser Aufgabe erfolgt gemäß den im Anspruch 1 angegebenen Merkmalen.

Die erfindungsgemäße Verbindungsanordnung ermöglicht bei einfacher und gleichwohl funktionssicherer Konstruktion den universellen Einsatz von Platten mit unterschiedlichen Dicken, wobei in bevorzugter Weise zusätzliche Komponenten zur Anpassung an die jeweiligen Plattendicken nicht erforderlich sind. Die Verbindungsanordnung enthält im montierten Zustand der Trennwand eine im Wesentlichen vertikal ausgerichtete Profilschiene, deren Länge zumindest näherungsweise der Höhe der Platte und/oder der Trennwand entspricht. Die Profilschiene dient zur Aufnahme und/oder Festlegung einer Befestigungseinheit für den Längsrand der Platte, wobei die Befestigungseinheit auf unterschiedliche Plattendicken einstellbar ist. Vorteilhaft sind wenigstens zwei Befestigungseinheiten vorgesehen, welche in axialer Richtung der Profilschiene beabstandet zueinander, insbesondere im Bereich des oberen und des unteren Endes der jeweiligen Platte positioniert sind und wesentlich kleinere Längen bzw. Höhen aufweisen als die Profilschiene. Die Profilschiene ist insbesondere als Wandanschlußprofil ausgebildet zwecks Befestigung der Platte an einer Raumwand, beispielsweise eines Duschraumes. Ferner kann die Profilschiene auch zur Verbindung mit anderen Bauteilen einer Trennwand, wie Scharniere, Lagerungen oder dergleichen ausgebildet sein.

Die Profilschiene enthält insbesondere als Stege ausgebildete Verbindungselemente, entlang welcher in Richtung der Längsachse der Profilschiene die wenigstens eine Befestigungseinheit einstellbar ist. Des Weiteren ist die Befestigungseinheit derart ausgebildet, dass eine Ausrichtung und/oder Positionierung des Längsrands der Platte quer zur Längsrichtung vorgebbar ist, so dass die Platte in einfacher Weise, insbesondere horizontal, ausrichtbar ist. Die Verbindungsanordnung enthält ferner ein Dekorprofil, mit welchem die im Innenbereich der Verbindungsanordnung vorhandene Befestigungseinheit bzw. Befestigungseinheiten, die genannten Stege usw. abgedeckt sind. Das Dekorprofil, insbesondere die Oberfläche des Dekorprofils, ist bevorzugt durchbrechungsfrei, insbesondere lochlos oder ausnehmungsfrei, ausgeführt, so dass der oder die Befestigungseinheiten von außen nicht sichtbar sind. Es wird weder von der Befestigungseinheit noch von anderen Befestigungselementen, wie Schrauben, durchdrungen. Ein Dekorprofil kann für eine Vielzahl unterschiedlich dicker Platten zum Einsatz gelangen. Die Querschnittsform und/oder die Oberflächengestaltung des Dekorprofils, welches im Wesentlichen die gleiche Länge wie die Profilschiene aufweist, können den Erfordernissen entsprechend vorgegeben werden. Dabei können funktionelle und/oder ästhetische Aspekte Berücksichtigung finden. Zur Verbindung des Dekorprofils sind in vorteilhafter Weise Rast- oder Clipsverbindungen vorgesehen, welche problemlos die Verbindung mit der Profilschiene oder die Demontage ermöglichen.

Besondere Ausgestaltungen und Weiterbildungen der Erfindung sind in den abhängigen Ansprüchen sowie der nachfolgenden Beschreibung eines besonderen Ausführungsbeispiels angegeben.

Die Erfindung wird nachfolgend anhand des in der Zeichnung dargestellten Ausführungsbeispiels näher erläutert, ohne dass insoweit eine Beschränkung erfolgt. Es zeigen:
- Fig. 1: teilweise und in perspektivischer Darstellung eines Ausführungsbeispiels der Verbindungsanordnung, und zwar lediglich deren oberen Teil,
- Fig. 2: einen Schnitt quer zur Längsachse des Ausführungsbeispiels der Verbindungsanordnung bzw. der Profilschiene,
- Fig. 3: eine Aufsicht von oben in explosionsartiger Darstellung des Ausführungsbeispiels,
- Fig. 4: eine perspektivische Darstellung einer Befestigungseinheit des Ausführungsbeispiels.

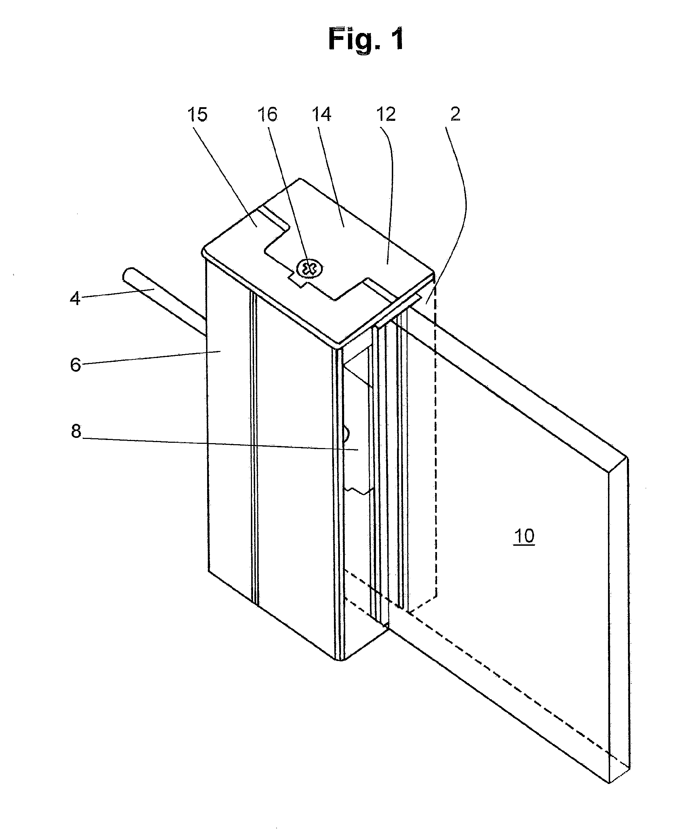

Gemäß Fig. 1 enthält die Verbindungsanordnung, deren oberes Ende nur teilweise und transparent dargestellt ist, eine Profilschiene 2, welche als Wandprofil ausgebildet und insbesondere mittels einer Schraube 4 mit einer Raumwand verbindbar ist. Mit der Profilschiene 2 ist ein Dekorprofil 6 verbunden, und in dem somit gebildeten Innenraum ist eine Befestigungseinheit 8 angeordnet, mittels welcher eine Platte 10 über ihren Längsrand 12 mit der Profilschiene 2 verbunden ist. Die Verbindungsanordnung und ebenso die Platte 10 weisen eine erheblich größere Länge bzw. Höhe wie dargestellt auf, wobei im Bereich des unteren Endes der Verbindungsanordnung und der Platte in vorteilhafter Weise eine weitere Befestigungseinheit entsprechend der dargestellten Befestigungseinheit 8 vorhanden ist. Am oberen Ende der Profilschiene 2 und des Dekorprofils 6 ist eine aus zwei Teilen 14, 15 zusammengesetzte Abdeckkappe vorgesehen, wobei zur Verbindung der Teile 14, 15 insbesondere eine Schraube 16 vorgesehen ist.

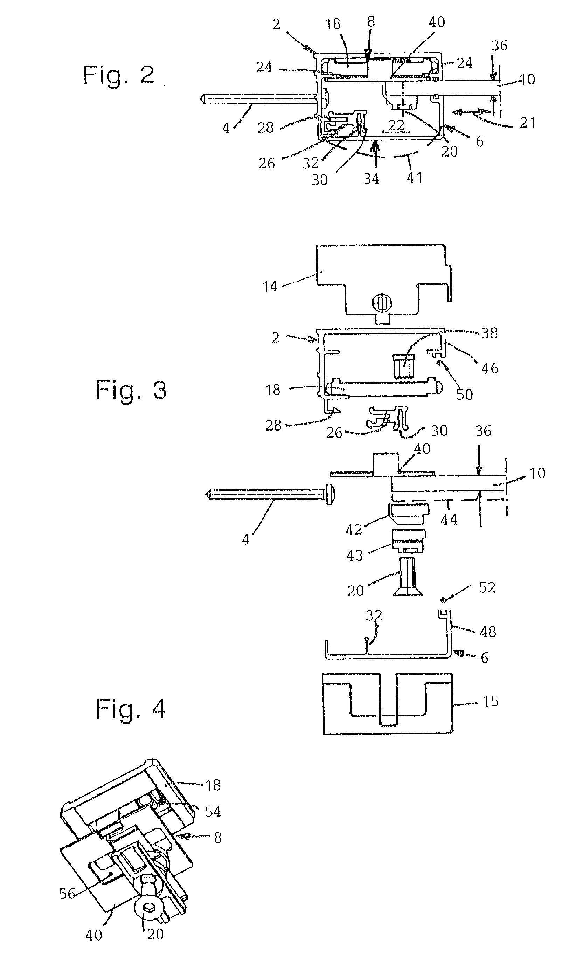

Fig. 2 zeigt einen Schnitt quer zur Längsachse, welche senkrecht zur Zeichenebene steht, der Verbindungsanordnung mit der im Wesentlichen L-förmigen Profilschiene 2 und der Schraube 4 zur Befestigung an einer Raumwand. Ein Gegenhalter 18 der Befestigungseinheit 8 ist in der Profilschiene 2 in Richtung der Längsachse verschiebbar angeordnet und mittels einer Schraube 20 in einer gewünschten Position festlegbar. Die Befestigungseinheit ist ferner derart ausgebildet, dass die Platte 10 gemäß Doppelpfeil 21 quer zur Längsache positionierbar und/oder ausrichtbar ist. Zur Führung und/oder Abstützung des Gegenhalters 18 enthält die Profilschiene 2 bzw. die Verbindungsanordnung im Innenraum 22 Führungsstege 24, bezüglich welcher der Gegenhalter 18 bei Bedarf festklemmbar ist. Ferner ist das in diesem Ausführungsbeispiel im Wesentlichen L-förmige Dekorprofil 6 mittels eines Halters 26 bezüglich der Profilschiene 2 festgelegt. Der Halter 26 ist einerseits auf einem weiteren Steg 28 der Profilschiene 2 festgelegt und enthält andererseits eine Befestigungsnut 30, in welche ein Kopplungselement 32 des Dekorprofils 6 eingreift. Es ist somit eine Rast- oder Clipverbindung des Dekorprofils 6 mit der Profilschiene 2 geschaffen, wobei das Dekorprofil 6 gemäß Pfeil 34 einen variabel vorgegebenen Abstand zur Profilschiene 2 aufweisen kann, und zwar in Abhängigkeit von der Dicke 36 der Platte 10. Der Halter 26 der Rast- oder Clipverbindung ist rechtwinklig ausgeführt.

Die Platte 10 ist mittels der genannten Schraube 20 der Befestigungseinheit 8 mit dem Gegenhalter 18 verbunden und/oder festgespannt, wobei die Schraube 20 in das Innengewinde eines zugeordneten Positionierungselements 38 eingreift, welches insbesondere als eine Mutter ausgebildet ist. Zwischen dem Gegenhalter 18 und der zugeordneten Fläche der Platte 10 ist ein Körper 40 angeordnet, welcher insbesondere als Schutz und/oder zur Positionierung der Platte 10 vorgesehen ist. Die Platte 10 kann aus einem transparenten Werkstoff, bevorzugt aus Glas, beispielsweise Silikatglas, bestehen. Mit gestrichelter Linie 41 ist ein alternativ ausgebildetes Dekorprofil angedeutet. Das Dekorprofil 6 liegt an der Platte 10 an, so dass zusammen mit der Profilschiene 2 der Innenraum 22 festgelegt wird, in welchem sich die Befestigungseinheit 8 und die Schraube 20 befinden.

In der explosionsartigen Darstellung gemäß Fig. 3 sind ferner die beiden Teile 14, 15 der erwähnten Abdeckkappe dargestellt. Die Größe der Abdeckkappe ist dadurch variabel oder vorgebbar, dass der Überlapp der zwei Teile 14,15 variierbar festlegbar ist. Zusätzlich zu der zwischen dem Körper 40 und den von der Schraube 20 durchdrungenen und/oder mit dieser in Verbindung stehenden Kopplungselementen 42, 43 angeordneten Platte 10 mit der Dicke 36 ist mit gestrichelter Linie 44 eine eine größere Dicke aufweisende Platte angedeutet. Somit ist ersichtlich, dass die Befestigungseinheit 8 und somit die Verbindungsanordnung insgesamt für Platten mit unterschiedlichen Dicken zum Einsatz gelangen kann. Es sei festgehalten, dass auch das Dekorprofil 6 aufgrund der Rast- oder Clipsverbindung 30, 32 auf die jeweilige Dicke der eingesetzten Platte einstellbar ist. Die Profilschiene 2 weist einen der Platte 10 zugeordneten Schenkel 46 auf und gegenüberliegend weist das Dekorprofil einen weiteren Schenkel 48 auf, deren Abstand entsprechend der Dicke der Platte 10 einstellbar ist. Die Schenkel 46, 48 enthalten weiterhin Nuten zur Aufnahme von Dichtprofilen 50, 52, welche an den jeweiligen Oberflächen der Platte 10 anliegen.

Fig. 4 zeigt perspektivisch in einer explosionsartigen Darstellung die Befestigungseinheit 8 mit dem Gegenhalter 18 und dem insbesondere als Glasschutz ausgebildeten Körper 40. Sowohl der Gegenhalter 18 als auch der Körper 40 enthalten Schlitze oder Nuten 54 bzw. 56, welche eine Positionierung der Platte in Kombination mit der Schraube 20 quer zur Längsachse ermöglichen.

### Bezugszeichen

- 2: Profilschiene
- 4: Schraube
- 6: Dekorprofil
- 8: Befestigungseinheit
- 10: Platte
- 12: Längsrand von 10
- 14, 15: Abdeckkappe
- 16: Schraube zu 14, 15
- 18: Gegenhalter
- 20: Schraube
- 21: Doppelpfeil
- 22: Innenraum von 2
- 24: Führungssteg in 22
- 26: Halter
- 28: weiterer Steg von 2
- 30: Befestigungsnut von 26
- 32: Kopplungselement
- 34: Pfeil
- 36: Dicke von 10
- 38: Positionierungselement / Mutter
- 40: Körper
- 41: gestrichelte Linie / Dekorprofil
- 42, 43: Kopplungselement
- 44: gestrichelte Linie
- 46: Schenkel von 2
- 48: weiterer Schenkel von 6
- 50, 52: Dichtprofil
- 54: Schlitz / Nut in 18
- 56: Schlitz / Nut in 40

## Patentansprüche

1. Verbindungsanordnung einer Trennwand, insbesondere einer Duschtrennwand, enthaltend eine Profilschiene (2) und eine mit dieser im Randbereich verbundene Platte (10), wobei in der Profilschiene (2) eine in Richtung deren Längsachse positionierbare und feststellbare Befestigungseinheit (8) vorgesehen ist und die Profilschiene (2) wenigstens einen der Befestigungseinheit (8) zugeordneten Führungssteg (24) in einem Innenraum (22) enthält, wobei ein den Innenraum (22) begrenzendes Dekorprofil (6) vorgesehen ist, **dadurch gekennzeichnet dass** das Dekorprofil (6) mittels wenigstens eines Halters (26) mit der Profilschiene (2) lösbar verbunden ist und dass die Befestigungseinheit (8) für Platten (10) mit unterschiedlicher Dicke (36) ausgebildet ist, wobei das Dekorprofil (6) entsprechend der jeweiligen Dicke (36) der Platte (10) durch den Halter (26) bezüglich der Profilschiene (2) positionierbar angeordnet ist.

2. Verbindungsanordnung nach Anspruch 1**, dadurch gekennzeichnet, dass** das Dekorprofil (6) die im Innenbereich der Verbindungsanordnung vorhandene wenigstens eine Befestigungseinheit (8) abdeckt.

3. Verbindungsanordnung nach Anspruch 1 oder 2, **dadurch gekennzeichnet, dass** das Dekorprofil (6) durchbrechungsfrei ist.

4. Verbindungsanordnung nach einem der Ansprüche 1 bis 3, **dadurch gekennzeichnet, dass** die Befestigungseinheit (8) einen Gegenhalter (18) enthält, welcher bezüglich des oder der Führungsstege (24) im Innenraum (2) festlegbar und/oder festklemmbar ist.

5. Verbindungsanordnung nach einem der Ansprüche 1 bis 4, **dadurch gekennzeichnet, dass** die Befestigungseinheit (8) einen Körper (40) enthält, welcher einerseits am Gegenhalter (18) zur Anlage bringbar ist und andererseits an einer Oberfläche der Platte (10) anliegt.

6. Verbindungsanordnung nach einem der Ansprüche 1 bis 5, **dadurch gekennzeichnet, dass** die Befestigungseinheit (8) eine Schraube (20) enthält, mittels welcher der Gegenhalter (18) bezüglich des Führungsstegs (24) festklemmbar ist.

7. Verbindungsanordnung nach einem der Ansprüche 1 bis 6, **dadurch gekennzeichnet, dass** eine Schraube (20) eine Bohrung oder Ausnehmung im Randbereich der Platte (10) durchdringt.

8. Verbindungsanordnung nach einem der Ansprüche 1 bis 7, **dadurch gekennzeichnet, dass** mit der Profilschiene (2) ein Halter (26) verbunden ist und/oder dass der Halter (6) auf einem weiteren Steg (28) der Profilschiene (2) festgelegt ist und/oder dass mit dem Halter (26) das Dekorprofil lösbar verbunden ist.

9. Verbindungsanordnung nach Anspruch 8, **dadurch gekennzeichnet, dass** das Dekorprofil (6) ein Kopplungselement (32) aufweist, welches mit dem Halter (26) in Abhängigkeit der Dicke der Platte (10) in Eingriff steht, wobei das Kopplungselement (32) und der zugeordnete Halter (26) über eine Rast- oder Clipverbindung in Verbindung stehen.

10. Verbindungsanordnung nach einem der Ansprüche 1 bis 9, **dadurch gekennzeichnet, dass** die Profilschiene (2) einen Schenkel (46) und diesem zugeordnet das Dekorprofil (48) einen weiteren Schenkel (48) enthalten, wobei zwischen den genannten Schenkeln (46, 48) ein entsprechend der Dicke der Platte (10) vorgebbarer Abstand vorhanden ist.

11. Verbindungsanordnung nach Anspruch 10, **dadurch gekennzeichnet, dass** die Schenkel (46, 48) Dichtprofile (50, 52) enthalten, welche an den Oberflächen der Platte (10) anliegen.

12. Verbindungsanordnung nach einem der Ansprüche 1 bis 11, **dadurch gekennzeichnet, dass** an den oberen Enden der Profilschiene (2) und des Dekorprofils (6) eine aus zwei Teilen (14, 15) zusammengesetzte Abdeckkappe angeordnet ist, deren Größe in Abhängigkeit von der Dicke der eingesetzten Platte (10) variabel und/oder vorgebbar ist.

## Claims

1. Connection assembly of a partition, in particular a shower screen, comprised of a sectional rail (2) and a plate (10) joined with the latter in the edge area, wherein a fastening unit (8) is provided in the sectional rail (2) that can be positioned and fixed in the area of its longitudinal axis, and the sectional rail (2) contains at least one guide web (24) allocated to the fastening unit (8) in an interior space (22), wherein a decorative section (6) bordering the interior space (22) is provided,
**characterized in that** the decorative section (6) is detachably joined with the sectional rail (2) by means of at least one holder (26), and that the fastening unit (8) is designed for plates (10) with a varying thickness (36), wherein the decorative section (6) can be positioned relative to the sectional rail (2) by means of the holder (26) based on the respective thickness (36) of the plate (10).

2. The connection assembly according to claim 1, **characterized in that** the decorative section (6) covers the at least one fastening unit (8) present in the interior area of the connection assembly.

3. The connection assembly according to claim 1 or 2, **characterized in that** the decorative section (6) is puncture-free.

4. The connection assembly according to one of claims 1 to 3, **characterized in that** the fastening unit (8) contains a counter-holder (18), which can be fixed and/or clamped in place in relation to the guide web(s) (24) in the interior space (2).

5. The connection assembly according to one of claims 1 to 4, **characterized in that** the fastening unit (8) contains a body (40) which can be made to abut against the counter-holder (18) on the one hand, and abuts against a surface of the plate (10) on the other.

6. The connection assembly according to one of claims 1 to 5, **characterized in that** the fastening unit (8) contains a screw (20), with which the counter-holder (18) can be clamped in place in relation to the guide web (24).

7. The connection assembly according to one of claims 1 to 6, **characterized in that** a screw (20) penetrates through a hole or recess in the edge area of the plate (10).

8. The connection assembly according to one of claims 1 to 8, **characterized in that** a holder (26) is joined with the sectional rail (2) and/or that the holder (6) is secured to another web (28) of the sectional rail (2) and/or that the decorative section is detachably joined with the holder (26).

9. The connection assembly according to claim 8, **characterized in that** the decorative section (6) exhibits a coupling element (32), which engages the holder (26) as a function of the thickness of the plate (10), wherein the coupling element (32) and the allocated holder (26) are joined together by means of a latching or clip connection.

10. The connection assembly according to one of claims 1 to 9, **characterized in that** the sectional rail (2) contains a leg (46) and the decorative section (48) allocated thereto contains another leg (48), wherein a distance that can be adjusted based on the thickness of the plate (10) is present between the aforesaid legs (46, 48).

11. The connection assembly according to claim 10, **characterized in that** the legs (46, 48) contain sealing sections (50, 52) that abut against the surfaces of the plate (10).

12. The connection assembly according to one of claims 1 to 11, **characterized in that** a cover cap made of two parts (14, 15) is arranged at the upper ends of the sectional rail 92) and the decorative section (6), the size of which can be varied and/or adjusted as a function of the thickness of the used plate (10).

## Revendications

1. Dispositif d'assemblage d'une paroi de séparation, notamment d'une paroi de séparation de douche, comprenant un rail profilé (2) et un panneau (10) relié à ce dernier dans la zone marginale, dans le rail profilé (2) étant prévue une unité de fixation (8) susceptible d'être positionnée et immobilisée en direction de son axe longitudinal et le rail profilé (2) comprenant dans un espace intérieur (22) au moins un listel de guidage (24) associé à l'unité de fixation (8), un profilé décoratif (6) délimitant l'espace intérieur étant prévu,
**caractérisé en ce que** le profilé décoratif (6) est relié de manière amovible avec le rail profilé (2) au moyen d'au moins un support (26) et **en ce que** l'unité de fixation (8) est conçue pour des panneaux (10) de différentes épaisseurs (36), le profilé décoratif (6) étant placé en étant positionnable par le support (26) par rapport au rail profilé (2) en fonction de l'épaisseur (36) correspondante du panneau (10).

2. Dispositif d'assemblage selon la revendication 1, **caractérisé en ce que** le profilé décoratif (6) recouvre l'au moins une unité de fixation (8) présente dans la zone intérieure du dispositif d'assemblage.

3. Dispositif d'assemblage selon la revendication 1 ou la revendication 2, **caractérisé en ce que** le profilé décoratif (6) est libre de tout percement.

4. Dispositif d'assemblage selon l'une quelconque des revendications 1 à 3, **caractérisé en ce que** l'unité de fixation (8) comprend un contre-support (8) qui est susceptible d'être immobilisé ou serré par rapport au ou aux listel(s) de guidage (24) dans l'espace intérieur (2).

5. Dispositif d'assemblage selon l'une quelconque des revendications 1 à 4, **caractérisé en ce que** l'unité de fixation (8) comprend un organe (40), lequel peut être d'une part amené en application sur le contre-support (18) et qui est adjacent d'autre part à une surface du panneau (10).

6. Dispositif d'assemblage selon l'une quelconque des revendications 1 à 5, **caractérisé en ce que** l'unité de fixation (8) comprend une vis (20) à l'aide de laquelle le contre-support (18) peut être serré par rapport au listel de guidage (24).

7. Dispositif d'assemblage selon l'une quelconque des revendications 1 à 6, **caractérisé en ce qu'**une vis (20) traverse un perçage ou un évidement dans la zone marginale du panneau (10).

8. Dispositif d'assemblage selon l'une quelconque des revendications 1 à 7, **caractérisé en ce qu'**un support (26) est relié avec le rail profilé (2) et/ou **en ce que** le support (6) est fixé sur un listel (28) supplémentaire du rail profilé (2) et/ou **en ce que** le profilé décoratif est relié de manière amovible avec le support (26).

9. Dispositif d'assemblage selon la revendication 8, **caractérisé en ce que** le profilé décoratif (6) comporte un élément d'accouplement (32) lequel est en engagement avec le support (26), en fonction de l'épaisseur du panneau (10), l'élément d'accouplement (32) et le support associé (26) étant en liaison par l'intermédiaire d'un assemblage par enclenchement ou par clip.

10. Dispositif d'assemblage selon l'une quelconque des revendications 1 à 9, **caractérisé en ce que** le rail profilé (2) comprend une branche (46) et associée à cette dernière, le profilé décoratif (48) comprend une autre branche (48), entre les branches (46, 48) citées étant présent un écart prédéfinissable, correspondant à l'épaisseur du panneau (10).

11. Dispositif d'assemblage selon la revendication 10, **caractérisé en ce que** les branches (46, 48) comprennent des profilés d'étanchéité (50, 52) lesquels sont adjacents aux surfaces du panneau (10).

12. Dispositif d'assemblage selon l'une quelconque des revendications 1 à 11, **caractérisé en ce que** sur les extrémités supérieures du rail profilé (2) et du profilé décoratif (6) est placé un capuchon de recouvrement monté en deux parties (14, 15) dont la dimension est variable et/ou prédéfinissable en fonction de l'épaisseur du panneau (10) utilisé.
